# EUROPEAN PATENT SPECIFICATION

(11) **EP 4 096 184 B1**
(45) Date of publication and mention of the grant of the patent: **25.09.2024**
(21) Application number: 21176546.6
(22) Date of filing: 28.05.2021
(51) Int. Cl.: H04L 9/40, H04L 67/56

(54) **A METHOD AND SYSTEM OF PARENTAL CONTROL IN A CONVERGED ACCESS NETWORK**
VERFAHREN UND SYSTEM DER ELTERLICHEN KONTROLLE IN EINEM KONVERGIERTEN ZUGANGSNETZWERK
PROCÉDÉ ET SYSTÈME DE CONTRÔLE PARENTAL DANS UN RÉSEAU D'ACCÈS CONVERGÉ

(43) Date of publication of application: 30.11.2022
(73) Proprietor: Deutsche Telekom AG, 53113 Bonn (DE)
(72) Inventor: Dr. KIM, Ju Hoon, 14947 Nuthe-Urstromtal (DE)
(74) Representative: Vossius & Partner Patentanwälte Rechtsanwälte mbB

(56) References cited:
- US-A1- 2016 080 322
- US-A1- 2019 190 820
- "3 Generation Partnership Project; Technical Specification Group Services and System Aspects; Service aspects; Service principles (Release 18)", vol. SA WG1, no. V18.1.0, 2 April 2021 (2021-04-02), pages 1 - 104, XP052000375, Retrieved from the Internet <URL:https://ftp.3gpp.org/Specs/archive/22_series/22.101/22101-i10.zip 22101-i10.doc> [retrieved on 20210402]

## Description

The present invention relates to a method and system for a centralized parental control.

Today, children can easily access digital contents as media and network technologies advance. It becomes more difficult to protect children from unsound contents (e.g. violent and sexual contents) due to the plethora of digital contents. Existing content filtering technologies are either content provider-specific (e.g., a password protection in an application such as Netflix) or limited to a home gateway (e.g., a router) which requires a manual configuration and maintenance effort of the parents. In such a manual configuration, an explicit and manual allowance/prohibition to access specific contents is often required, e.g. by focusing on an end-device recognition, a password setting for a specific application or on an IP address blacklisting.

Furthermore, the existing technologies mostly focus on one access network which cannot protect underage users from accessing violent and sexual contents when they are connecting to the Internet through other access networks. The conventional parent control system can cover only a certain network environment (i.e., a specific access network such as a home network or specific service applications such as Netflix). Thus, such a parental control effort will be easily neutralized when children connect their devices to the Internet from access points that are outside of the home network (e.g., through mobile broadband or public access networks).

US 2016/080322 A1 discloses a device which may receive a first indication that a user device connected to a first network device associated with a first network, the first indication including a hardware identifier associated with the user device; identify a policy set associated with the hardware identifier; and output the policy set to the first network device. The outputting may cause the first network device to filter traffic, transmitted via the first network device and destined for the user device, in accordance with the policy set. The device may receive a second indication that the user device has connected to a second network device associated with a second network; and output the policy set to the second network device. The outputting may cause the second network device to filter traffic, transmitted via the second network device and destined for the user device, in accordance with the policy set.

It is thus an object of the present invention to provide a method and system for parental control that obviates disadvantages of parental controlling according to the prior art.

The invention is defined by the appended independent claims. Further embodiments are defined by the appended dependent claims.

According to an aspect of the invention, a method of controlling an access to a content is provided, comprising: receiving, at parental controlling means, a request for an access to a content from a user equipment through an access network, wherein the parental controlling means is configured in a converged network core of a mobile communication network for a centralized parental control; determining, at the parental controlling means, whether an identifier of the user equipment matches with an identifier of a user equipment registered in the parental controlling means for controlling an access; if the identifier of the user equipment matches with the identifier registered in the parental controlling means, determining, at the parental controlling means, whether the access to the content is allowable; and blocking, at the parental controlling means, the access to the content, if the access is not allowable. As the parent controlling means is configured in a network element (a converged core network) of a mobile communication network, a request for a content may be centrally processed regardless of the user's location (e.g. a base station through which the request is sent). A user verification for a registered user may be performed using a database for storing identifiers of registered users with user-specific information.

According to an aspect of the invention, the access network can be any one of Home WiFi, a cellular network and a private/public hotspot. Thus, a user equipment can send a request for an access to a content over a private or public router, a base station or another user equipment providing a hotspot according to the corresponding access network. All network accesses can be converged within a core network, e.g. within a user plane function (UPF) in 5G core. Thus, regardless of an access network used by the UE to send the request, a parental control may be performed by parental controlling means configured in the network element.

The determining whether the access to the content is allowable comprises comparing content information with user-specific information. Content information may comprise any of service identification information, content identification information and content restriction information such as a minimum user age set for the content. The content information comprises information retrievable from the request. The content information may also comprise information retrievable from a content database configured in the parental controlling means. Alternatively, the content information comprises information retrievable from the request and information retrievable from a content database configured in the parental controlling means. User-specific information may be any information specific to the user associated with the user equipment, for example, the user's age or an exception list to be applied to the user in which contents exceptionally allowed or prohibited for the user are listed.

The information retrievable from the request comprises service identification information. Additionally, the information retrievable from the request comprises content identification information. The service identification information may comprise a service provider identifier such as a domain name or a service name. The content identification information comprises one or more service-specific parameters and/or a URL. A content may be identified by the one or more service-specific parameters and/or URL.

Preferably, the information retrievable from a content database comprises user-restriction information for content.

Preferably, the user-specific information is retrievable from a user database configured in the parental controlling means. The user-specific information may also be receivable from at least one further user equipment. The at least one further user equipment may be related to the user equipment which sent the request. For instance, the user of the at least one further user equipment may be a parent of the registered user.

Preferably, the user-specific information comprises an age of the user of the user equipment and/or content allowance information. Content allowance information may comprise one or more lists of contents that are allowed or prohibited for the user. Such an exception list may be made by the parent in advance.

According to an aspect of the invention, the method further comprises creating, if user-restriction information is not stored for a/the content in a/the content database, at least one entry in the content database comprising user-restriction information.

Preferably, the creating at least one entry in the content database comprises collecting user-restriction related information from at least one database; determining the user-restriction information based on the user-restriction related information; and storing the user-restriction information in the content database. User-restriction related information is any information based on which the user-restriction information is determined and may comprise any of the following or a combination thereof: information stored in a database, a blacklist/whitelist for specific contents, information provided by a content provider (e.g. a keyword), and parent's voting.

Preferably, the creating at least one entry in the content database comprises receiving user-restriction related information from at least one further user equipment; determining the user-restriction information based on the user-restriction related information; and storing the user-restriction information in the content database. By sending their voting, parents may influence on a user-restriction level for a content.

According to a further aspect of the invention, the method further comprises updating, if user-restriction information is stored for a/the content in a/the content database, at least one entry in the content database comprising user-restriction information.

Preferably, the updating at least one entry in the content database comprises collecting user-restriction related information from at least one database; determining the user-restriction information based on the user-restriction related information; and storing the user-restriction information in the content database. User-restriction related information is any information based on which the user-restriction information is determined and may comprise any of the following or a combination thereof: information stored in a database, a blacklist/whitelist for specific contents, information provided by a content provider (e.g. a keyword), and parent's voting.

Preferably, the updating at least one entry in the content database comprises receiving user-restriction related information from at least one further user equipment; determining the user-restriction information based on the user-restriction related information; and storing the user-restriction information in the content database. By sending their voting, parents may influence on a user-restriction level for a content.

The steps of creating at least one entry in the content database and updating at least one entry in the content database may be carried out also in parallel; for instance, one entry for first user-restriction information is created while another entry for second user-restriction information is updated.

Thus, the content database may be updated dynamically, e.g. using available databases and/or algorithms.

Preferably, the blocking the access to the content comprises sending an error message to the user equipment. Alternatively or additionally, the blocking the access to the content may comprise sending a notification to at least one further user equipment.

According to an aspect of the invention, a parental controlling means is provided for controlling an access to a content according to the method of any of preceding aspects.

According to an aspect of the invention, a system is provided, comprising a parental controlling means for controlling an access to a content according to the method of any of preceding aspects and at least one user equipment, wherein the user equipment is configured to carry out one of the following or any combination thereof: i) to send a request for an access to a content to the parent controlling means, ii) to receive a notification from the parental controlling means, iii) to send user-specific information to the parent controlling means, iv) to send user-restriction related information to the parent controlling means.

Other aspects, features, and advantages will be apparent from the summary above, as well as from the description that follows, including the figures and the claims.

### BRIEF DESCRIPTION OF THE DRAWINGS

- Fig. 1: shows an overview of the system according to an embodiment of the invention.
- Fig. 2: shows a block diagram of the method for parental control according to an embodiment of the invention.
- Fig. 3: shows a content assessment process according to an embodiment of the invention.
- Fig. 4: shows a parental control app according to an embodiment of the invention.

### DETAILED DESCRIPTION OF THE DRAWINGS

The present invention relates to universal parental controlling means that can be used in a converged network system where all access network connections are converged within a common network core.

The present invention aims at content filtering of unsound contents (e.g. violent and sexual contents) for the purpose of a parental control. The invention may be implemented by a fully converged network environment where all different access networks are operated by a common central core. Such a converged network concept is currently under standardization with different names such as FMC (Fixed Mobile Convergence) or WWC (Wireline and Wireless Convergence). In a converged network environment, an Internet service subscriber (a.k.a., a user) can be identified regardless of their access networks (e.g., DSL, Mobile broadband, or public hotspot). Devices connected to the Internet may be identifiable by the common network core. This may enable that parents register certain devices as their children's devices.

In case that children have their own data subscription, their identities may be related with their parent's subscription. Thus, the core network recognizes a subscriber to control children's content consumption.

A user does not need to set the parental control for every single device and service. Once the user registers their children's devices to the operator's database, the parental control system will take care of the parental control regardless of the access technology (e.g., Home WiFi, a cellular network, a private/public hotspot, etc.) that the child is using.

In an embodiment of the invention, a method of controlling an access to a content is provided, comprising: receiving, at parental controlling means, a request for an access to a content from a user equipment through an access network, wherein the parental controlling means is configured in a network element of a mobile communication network; determining, at the parental controlling means, whether an identifier of the user equipment matches with an identifier of a user equipment registered in the parental controlling means for controlling an access; if the identifier of the user equipment matches with the identifier registered in the parental controlling means, determining, at the parental controlling means, whether the access to the content is allowable; and blocking, at the parental controlling means, the access to the content, if the access is not allowable.

In an embodiment of the invention, the access network can be any one of Home WiFi, a cellular network and a public/privite hotspot and/or the network element can be a converged network core. Thus, a user equipment can send a request for an access to a content over a router, a base station or another user equipment providing a hotspot according to the corresponding access network. All network accesses can be converged within the core network, e.g. within a user plane function (UPF) in 5G core.

In a preferred embodiment of the invention, the determining whether the access to the content is allowable comprises comparing content information with user-specific information. Content information may comprise any of service identification information, content identification information and content restriction information such as a minimum user age set for the content. Content information may be either included in the request or retrieved from a database. User-specific information may be any information specific to the user associated with the user equipment, for example, the user's age or an exception list to be applied to the user. In an exception list, contents exceptionally allowed or prohibited for the user may be listed.

In a preferred embodiment of the invention, the content information comprises information retrievable from the request and/or information retrievable from a content database configured in the parental controlling means.

In a preferred embodiment of the invention, the information retrievable from the request comprises service identification information and/or content identification information, the service identification information comprising a service provider identifier and the content identification information comprising one or more service-specific parameters and/or a URL.

In a preferred embodiment of the invention, the information retrievable from a content database comprises user-restriction information for content.

In a preferred embodiment of the invention, the user-specific information is retrievable from a user database configured in the parental controlling means and/or receivable from at least one further user equipment. Preferably, the user-specific information comprises an age of the user of the user equipment and/or content allowance information.

In an embodiment of the invention, the method further comprises creating, if user-restriction information is not stored for a/the content in a/the content database, at least one entry in the content database comprising user-restriction information; and/or updating, if user-restriction information is stored for a/the content in a/the content database, at least one entry in the content database comprising user-restriction information.

In a preferred embodiment of the invention, the creating and/or the updating comprises collecting user-restriction related information from at least one database; determining the user-restriction information based on the user-restriction related information; and storing the user-restriction information in the content database.

In a preferred embodiment of the invention, the creating and/or the updating comprises receiving user-restriction related information from at least one further user equipment; determining the user-restriction information based on the user-restriction related information; and storing the user-restriction information in the content database. User-restriction related information is any information based on which the user-restriction information is determined and can comprise information stored in a database, and/or a blacklist or a whitelist for specific contents and/or content providers, and/or parent's voting.

In a preferred embodiment of the invention, the blocking the access to the content comprises sending an error message to the user equipment and/or sending a notification to at least one further user equipment.

In an embodiment of the invention, a parental controlling means is provided for controlling an access to a content according to the method of any of preceding aspects.

In an embodiment of the invention, a system is provided, comprising a parental controlling means for controlling an access to a content according to the method of any of preceding aspects and at least one user equipment, wherein the user equipment is configured to send a request for an access to a content and/or to receive a notification from the parental controlling means and/or to send user-specific information and/or user-restriction related information to the parent controlling means.

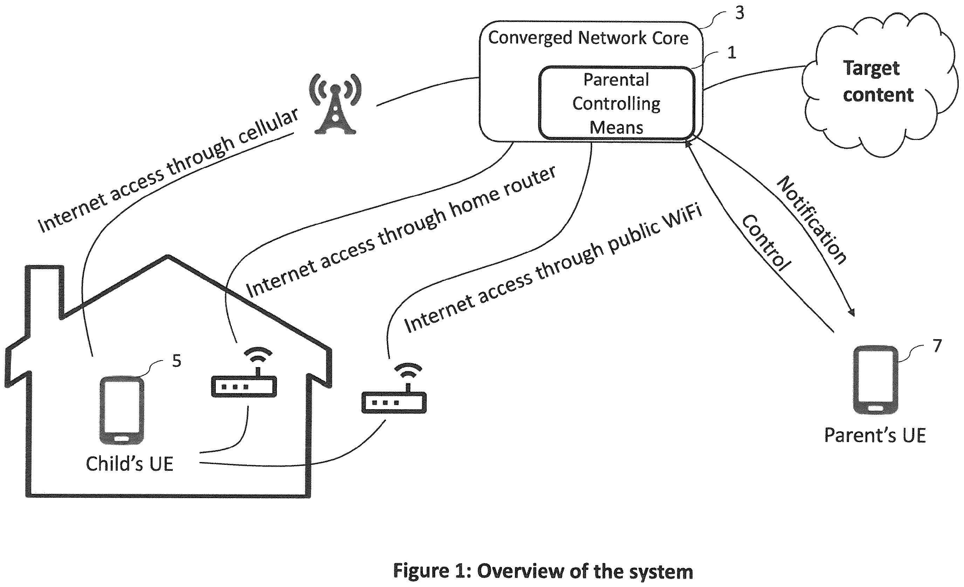

Fig. 1 shows an overview of the system according to an embodiment of the invention. A parental controlling means 1 may be implemented within a core network 3 where all network accesses are converged (e.g., within the User Plane Function (UPF) in 5G Core). However, the present invention is not limited to any specific network core technology.

A user's request for a digital content on Internet may be sent by a user equipment 5 (e.g. of a child) through any access network such as Home WiFi, a cellular network or a public/private hotspot. Thus, the request may be sent over a router, another user equipment providing a private hotspot or a base station providing an access to a cellular network. Regardless of the access network through which the user's request is sent, the request passes through the parental controlling means within a network core, when network accesses are converged within a core network. The core network 3 (converged network core) may be provided e.g. within a User Plane Function (UPF) in 5G core.

The parental controlling means 1 determines whether an identifier of the user equipment 5 matches with an identifier of a user equipment registered in the parental controlling means 1 for controlling an access. If the identifier of the user equipment 5 matches with the identifier registered in the parental controlling means 1, the parental controlling means 1 determines whether the access to the content is allowable. If the access is allowable, the access is forwarded towards the content requested (target content). If the access is not allowable, the access is blocked and a notification is sent to further user equipment 7 related to the user equipment 5 which sent the request, e.g. a parent's UE. The parent may send control information e.g. for registering their children or for approving/denying the content access request from their children upon notifications. Parents may vote for or against a restriction level of a specific content.

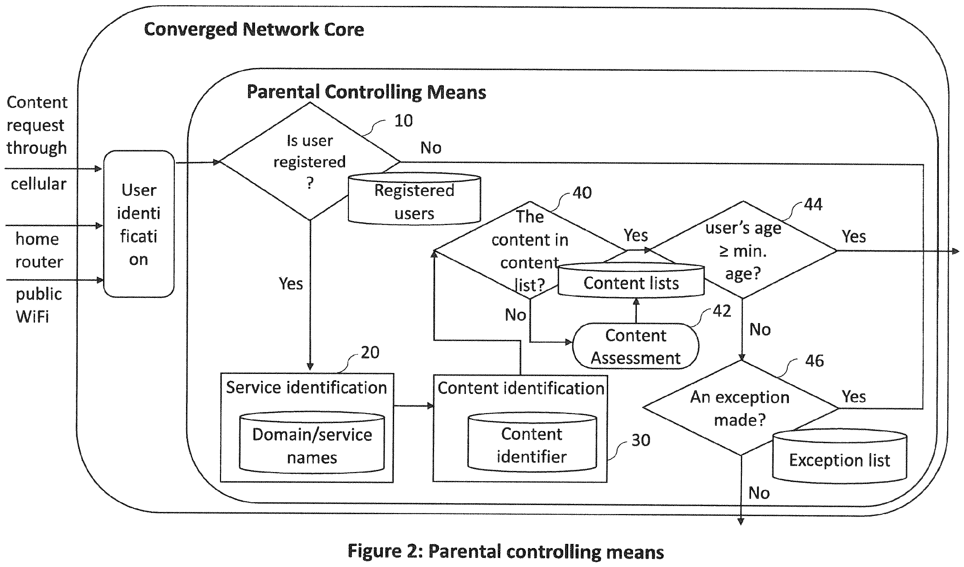

Fig. 2 shows a block diagram of the method for parental control according to an embodiment of the invention.

A user equipment (UE) may be identified at the User Identification by an identifier stored in the user equipment such as an IMSI (International Mobile Subscriber Identity). After receiving a request for an access to a content at parental controlling means from a UE through an access network, the parental controlling means determines in step 10 whether the identifier of the UE which requested a content matches with an identifier of a UE associated with registered users in the parental controlling means. The determination may be carried out with an algorithm which enables a fast matching using a hash function.

The parental controlling means may manage a list of UEs associated with registered users whose access for a content should be controlled. The registered users may be underage users registered by their parents. Thus, the parental controlling means carries out a user verification by determining whether the user associated with the UE that sent a request for a content is a user registered as a child at the parental controlling means. Further, the parental controlling means may store user-specific information such as the registered user's age or content allowance information such as a list of contents that are allowed for the user (i.e. an exception list). The user-specific information may be stored in advance and/or requested from another user equipment (e.g. a parent's UE) on the fly.

If the identifier of the UE does not match with an identifier registered in the parental controlling means (i.e. the user associated with the UE that sent a request for a content is not a user in the list of registered underage users), the request is forwarded to a further network element, e.g. to a data network, towards the content requested without being processed further at the parental controlling means.

If the identifier of the UE matches with an identifier registered in the parental controlling means (i.e. the user associated with the UE that sent a request for a content is a user in the list of registered underage users), the request is further processed at the parental controlling means for determining whether the access to the content requested is allowable.

A request for an access to a content may include a URL (Unified Resource Locator). URLs are commonly used to reference web pages or media contents. A typical URL may look like the following: https://www.youtube.com/watch?v=7Smrw-BYe1I. From the URL, content information can be obtained. Content information may comprise service identification information (e.g. the service/domain name) and/or content identification information (e.g. one or more service specific parameters that correspond to an exact content). For instance, in an exemplary URL https://www.youtube.com/watch?v=7Smrw-BYe1I, a high-level domain name, i.e. "youtube.com" in this example, suggests that the service provider is YouTube.

In step 20, a service or a service provider (such as www, Netflix, YouTube, etc.) is identified by matching the requested URL's high-level domain name with information for identifying a service provider or a service. The information for identifying a service provider or a service may be stored in a service/domain database at the parental controlling means. The service/domain database may store mapping information between known domain names and service names. The identified service or service provider may be used to determine whether the request for an access to a content is allowable. For instance, if a specific service provider is identified from the URL of the request, the request may be determined as not allowable.

In step 30, a content (e.g. a film name, a web page, etc.) is identified by matching the requested URL's service-specific parameter(s) with information for identifying a content. The information for identifying a content may be stored in a content identifier database. For instance, in the exemplary URL https://www.youtube.com/watch?v=7Smrw-BYe1I, the service-specific parameter, i.e. "7Smrw-BYe1I" in this example, may be used to identify the exact content. The information stored in the content identifier database may comprise one or more service specific parameters. Any mapping information for mapping between contents and patterns of URL which can be used to extract content identifier may be stored in the content identified database. The identified content may be used to determine whether the request for an access to a content is allowable. For instance, if a specific content is identified from the URL of the request, the request may be determined as not allowable.

There may be a single or multiple (e.g., per-service) content databases that contain one or more lists of contents with content restriction information for each content. The content restriction information may comprise user-restriction information for the content such as age restriction. In step 40, it is determined whether the content is in the content list(s). Preferably, a size reduction operation may be applied for reducing the size of the content list. For example, an operator can decide whether the list contains only age-restricted contents or any contents. Alternatively or additionally, multiple contents can be presented as a single item on the list by using wild card characters (?, *) or pattern matching. However, a size reduction operation may be implemented in any other way of in any combination thereof and the invention is not limited to any of them.

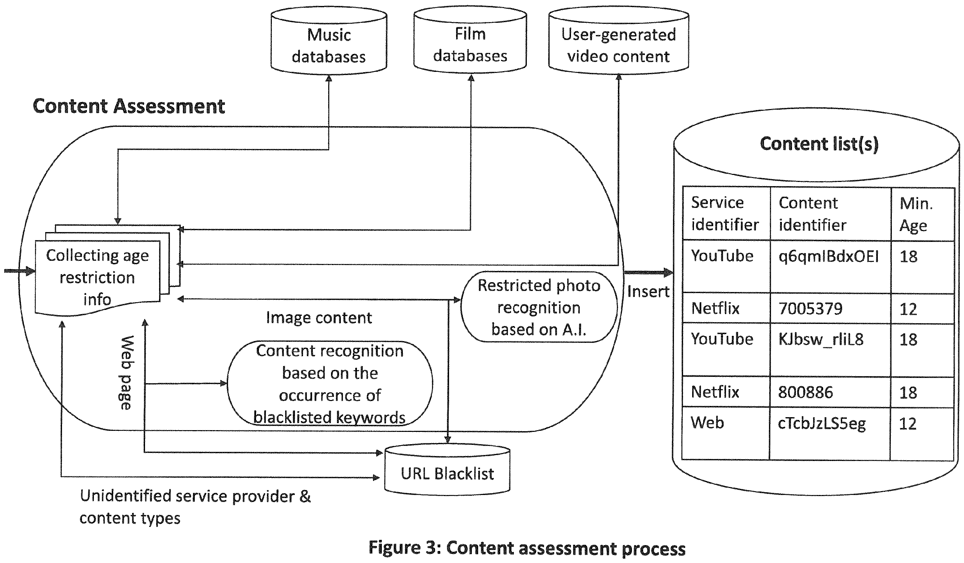

If the requested content is not found in the list in step 40, the request and/or a URL extracted from the request may be forwarded to the content assessment process (step 42). The content assessment process will be described in reference to Fig. 3.

For preventing an interruption of a content consumption while assessing the age restriction of the content, an operator may implement the content assessment process in such a way that the assessment process runs in parallel with a content delivery. In this case, a content may be presented to the user for few seconds (while the assessment is on-going), but as soon as the process finds out that the user's age does not meet the age level of the content according to age restriction information, the system stops the delivery of the content and sends an error/warning message back to the user equipment

If the requested content is found in the list(s) in step 40, the user-restriction information may be used to determine whether the content is allowable for the user in steps 44 and 46.

In step 44, age restriction information for the content is compared with the user's age. The user's age may form user-specific information which may be stored or requested to another user equipment (e.g. the parent's UE) on-the-fly. If the user's age is equal or greater than the content's minimum age according to age restriction information for the content, it is determined that the content is allowable. Thus, the request is forwarded to the further network element, e.g. a data network, towards the content requested. If the user's age is less than the content's minimum age, the request may proceed to step 46. Alternatively, in this case, the request may be determined not allowable and blocked without proceeding to step 46.

In step 46, it is determined whether the content is allowed using content allowance information. Content allowance information may form user-specific information which may be stored or requested to another user equipment (e.g. the parent's UE) on-the-fly. The content allowance information may comprise an exception list in which contents that are allowed for the user are stored. If the content is included in the exception list, the request is allowable. Thus, the request is forwarded to the further network element, e.g. to a data network, towards the content requested. If the content is not included in the exception list, the request may be determined not allowable and blocked.

Figure 2 shows that step 44 and step 46 are carried out in sequence. However, in another embodiment, each of step 44 and step 46 may be carried out alone, i.e. without step 46 and step 44, respectively. In another embodiment, step 46 may be carried out first and the age restriction information for the content is compared with the user's age if the content is not included in the exception list. In another embodiment, the content allowance information may alternatively and additionally comprise a (further) exception list in which contents that are prohibited for the user are stored.

If a request for an access to a content is determined not allowable, the access to the content is blocked. As described above, blocking may take place before or during a content delivery. In this event, an error message may be sent to the UE which sent the request for the content. Alternatively or additionally, a notification may be sent to at least one further UE(s), for example, UE(s) of parents.

Fig. 3 shows a content assessment process according to an embodiment of the invention. In the content assessment process, the parental controlling means may gather information related to content restriction from one or more public database(s) and/or from content provider's website(s)/database(s) and/or using operator-implemented mechanisms on contents (e.g., a photo recognition based on A.I. or a keyword blacklisting). The information related to content restriction may comprise user-restriction related information for the content, i.e. any information based on which user-restriction information can be determined. The user-restriction related information may comprise user-restriction information itself such as age restriction. Further, the one or more public database(s) may comprise a URL blacklist/whitelist and/or database(s) of contents (music, film, user-generated video, etc.) in which metadata about contents, in particular, content restriction information, are stored together with the contents.

After a content assessment, the result comprising content restriction information such as an age restriction can be stored in a content list. Thus, an entry in a content data base may be created or updated.

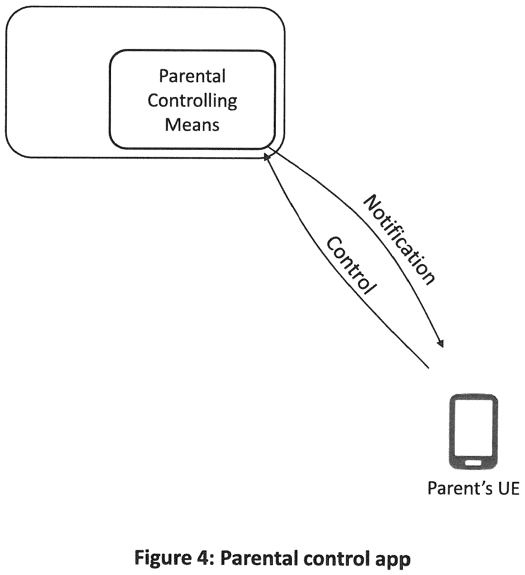

Fig. 4 shows a parental control app according to an embodiment of the invention. Parents may install an app on their smartphones or tablets (i.e. UE) that communicate with parental controlling means. A parental control system may comprise parental controlling means and parental control app. With the app, parents can register their children. Parents can be notified when their children attempt to access a content that is not allowable for the children. Parents may approve or deny the content access request from their children upon notifications. Parents may vote for or against a restriction level of a specific content. The votes made by the parents' community can be taken into consideration to adjust a user restriction level of a content in a content assessment process. If a specific content is not in the content list, parents may request for a content assessment process for setting age restriction for that specific content by providing the URL.

When a child attempts to access a content which is not appropriate for his/her age by sending a request, the parental controlling means may inform the parents through the app by sending a notification. The parents can then decide whether or not the content should be allowed for their child. Parents may participate in a content assessment process through the app by voting for or against a specific content. The parent control system may take the voting result into account for adjusting the content's age restriction. If a specific content does not exist within the content list, parents can request for a prior assessment of the content. Alternatively, the age restriction of the content may be assessed when it is requested for the first time.

What has been described and illustrated herein are embodiments of the invention along with some of variations. The terms, descriptions and figures used herein are set forth by way of illustration only and are not meant as limitations. In particular, the present invention covers further embodiments with any combination of features from different embodiments described above.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method of controlling an access to a content, comprising:
receiving, at parental controlling means (1), a request for an access to a content from a user equipment through an access network, wherein the parental controlling means (1) is configured in a converged network core (3) of a mobile communication network for a centralized parental control;
determining (10), at the parental controlling means (1), whether an identifier of the user equipment matches with an identifier of a user equipment (5) registered in the parental controlling means for controlling an access;
if the identifier of the user equipment matches with the identifier registered in the parental controlling means (1), determining (40, 44, 46), at the parental controlling means, whether the access to the content is allowable; and
blocking, at the parental controlling means (1), the access to the content, if the access is not allowable,
wherein the determining whetherthe access to the content is allowable comprises comparing (44, 46) content information with user-specific information,
wherein the content information comprises information retrievable from the request,
wherein the information retrievable from the request comprises service identification information and content identification information, the service identification information comprising a service provider identifier and the content identification information comprising one or more service-specific parameters and/or a URL.

2. The method of claim 1, wherein the access network is any one of WiFi, a cellular network and a hotspot.

3. The method of claim 1 or 2, wherein the content information further comprises information retrievable from a content database configured in the parental controlling means (1).

4. The method of claim 3, wherein the information retrievable from a content database comprises user-restriction information for content.

5. The method of any one of claims 1 to 4, wherein the user-specific information is retrievable from a user database configured in the parental controlling means (1) and/or receivable from at least one further user equipment (7).

6. The method of any one of claims 1 to 5, wherein the user-specific information comprises an age of the user of the user equipment and/or content allowance information.

7. The method of any one of claims 1 to 6 further comprising:
creating (42), if user-restriction information is not stored for a/the content in a/the content database, at least one entry in the content database comprising user-restriction information; and/or
updating (42), if user-restriction information is stored for a/the content in a/the content database, at least one entry in the content database comprising user-restriction information.

8. The method of claim 7, the creating and/or the updating comprising:
collecting user-restriction related information from at least one database;
determining the user-restriction information based on the user-restriction related information; and
storing the user-restriction information in the content database.

9. The method of claim 7 or 8, the creating and/or the updating comprising:
receiving user-restriction related information from at least one further user equipment; determining the user-restriction information based on the user-restriction related information; and
storing the user-restriction information in the content database.

10. The method of any one of claims 1 to 9, wherein the blocking the access to the content comprises sending an error message to the user equipment (5) and/or sending a notification to at least one further user equipment (7).

11. A parental controlling means (1) for controlling an access to a content according to any one of claims 1 to 10.

12. A system comprising a parental controlling means (1) according to claim 11 and at least one user equipment (5), wherein the user equipment (5) is configured to send a request for an access to a content and/or to receive a notification from the parental controlling means (1) and/or to send user-specific information and/or user-restriction related information to the parent controlling means (1).

## Patentansprüche

1. Verfahren zum Kontrollieren eines Zugriffs auf einen Inhalt, das aufweist:
Empfangen einer Anforderung für einen Zugriff auf einen Inhalt von einem Benutzergerät über ein Zugangsnetz an einer Einrichtung (1) zur elterlichen Kontrolle, wobei die Einrichtung (1) zur elterlichen Kontrolle in einem konvergierten Netzwerkkern (3) eines mobilen Kommunikationsnetzes für eine zentralisierte elterliche Kontrolle konfiguriert ist;
Bestimmen (10) in der Einrichtung (1) zur elterlichen Kontrolle, ob eine Kennung des Benutzergeräts mit einer Kennung eines Benutzergeräts (5) übereinstimmt, das in der Einrichtung zur elterlichen Kontrolle zum Kontrollieren eines Zugriffs registriert ist;
wenn die Kennung des Benutzergeräts mit der in der Einrichtung (1) zur elterlichen Kontrolle registrierten Kennung übereinstimmt, Bestimmen (40, 44, 46) in der Einrichtung zur elterlichen Kontrolle, ob der Zugriff auf den Inhalt zulässig ist; und
Sperren des Zugriffs auf den Inhalt an der Einrichtung (1) zur elterlichen Kontrolle, wenn der Zugriff nicht zulässig ist,
wobei das Bestimmen, ob der Zugriff auf den Inhalt zulässig ist, das Vergleichen (44, 46) von Inhaltsinformationen mit benutzerspezifischen Informationen aufweist,
wobei die Inhaltsinformationen Informationen aufweisen, die aus der Anforderung abrufbar sind,
wobei die aus der Anforderung abrufbaren Informationen Dienst-Identifikationsinformationen und Inhalts-Identifikationsinformationen aufweisen, wobei die Dienst-Identifikationsinformationen eine Dienstanbieterkennung aufweisen und die Inhalts-Identifikationsinformationen einen oder mehrere dienstspezifische Parameter und/oder eine URL aufweisen.

2. Verfahren nach Anspruch 1, wobei das Zugangsnetzwerk eines ist von: WiFi, einem Mobilfunknetz und einem Hotspot.

3. Verfahren nach Anspruch 1 oder 2, wobei die Inhaltsinformationen ferner Informationen aufweisen, die aus einer Inhaltsdatenbank abrufbar sind, die in der Einrichtung (1) zur elterlichen Kontrolle konfiguriert ist.

4. Verfahren nach Anspruch 3, wobei die aus einer Inhaltsdatenbank abrufbaren Informationen Benutzereinschränkungsinformationen für den Inhalt aufweisen.

5. Verfahren nach einem der Ansprüche 1 bis 4, wobei die benutzerspezifischen Informationen aus einer in der Einrichtung (1) zur elterlichen Kontrolle konfigurierten Benutzerdatenbank abrufbar und/oder von mindestens einem weiteren Benutzergerät (7) empfangbar sind.

6. Verfahren nach einem der Ansprüche 1 bis 5, wobei die benutzerspezifischen Informationen ein Alter des Benutzers des Benutzergeräts und/oder Informationen zur Inhaltserlaubnis aufweisen.

7. Verfahren nach einem der Ansprüche 1 bis 6, das ferner aufweist:
Erzeugen (42), wenn keine Benutzereinschränkungsinformationen für einen/den Inhalt in einer/der Inhaltsdatenbank gespeichert sind, von mindestens einem Eintrag in der Inhaltsdatenbank, der Benutzereinschränkungsinformationen aufweist; und/oder
Aktualisieren (42), wenn Benutzereinschränkungsinformationen für einen/den Inhalt in einer/der Inhaltsdatenbank gespeichert sind, mindestens eines Eintrags in der Inhaltsdatenbank, der Benutzereinschränkungsinformationen aufweist.

8. Verfahren nach Anspruch 7, wobei das Erzeugen und/oder das Aktualisieren aufweist:
Sammeln von benutzereinschränkungsbezogenen Informationen aus mindestens einer Datenbank;
Bestimmen der Benutzereinschränkungsinformationen basierend auf den benutzereinschränkungsbezogenen Informationen; und
Speichern der Benutzereinschränkungsinformationen in der Inhaltsdatenbank.

9. Verfahren nach Anspruch 7 oder 8, wobei das Erzeugen und/oder das Aktualisieren aufweist:
Empfangen von benutzereinschränkungsbezogenen Informationen von mindestens einem weiteren Benutzergerät;
Bestimmen der Benutzereinschränkungsinformationen basierend auf den benutzereinschränkungsbezogenen Informationen; und
Speichern der Benutzereinschränkungsinformationen in der Inhaltsdatenbank.

10. Verfahren nach einem der Ansprüche 1 bis 9, wobei das Sperren des Zugriffs auf den Inhalt das Senden einer Fehlermeldung an das Benutzergerät (5) und/oder das Senden einer Benachrichtigung an mindestens ein weiteres Benutzergerät (7) aufweist.

11. Einrichtung (1) zur elterlichen Kontrolle zum Kontrollieren des Zugriffs auf einen Inhalt nach einem der Ansprüche 1 bis 10.

12. System, das eine Einrichtung (1) zur elterlichen Kontrolle nach Anspruch 11 und mindestens ein Benutzergerät (5) aufweist, wobei das Benutzergerät (5) konfiguriert ist, eine Anforderung für einen Zugriff auf einen Inhalt zu senden und/oder eine Benachrichtigung von der Einrichtung (1) zur elterlichen Kontrolle zu empfangen und/oder benutzerspezifische Informationen und/oder benutzereinschränkungsbezogene Informationen an die Einrichtung (1) zur elterlichen Kontrolle zu senden.

## Revendications

1. Procédé de commande d'accès à un contenu, comprenant :
la réception, au niveau d'une unité de commande parentale (1), d'une demande d'accès à un contenu provenant d'un équipement utilisateur via un réseau d'accès, l'unité de commande parentale (1) étant configurée dans un coeur de réseau convergent (3) d'un réseau de communication mobile pour une commande parentale centralisée ;
la détermination (10), au niveau de l'unité de commande parentale (1), si un identifiant de l'équipement utilisateur correspond à un identifiant d'un équipement utilisateur (5) enregistré dans l'unité de commande parentale pour le commande d'un accès ;
si l'identifiant de l'équipement utilisateur correspond à l'identifiant enregistré dans l'unité de commande parentale (1), la détermination (40, 44, 46), au niveau de l'unité de commande parentale, si l'accès au contenu est autorisé ; et
le blocage, au niveau de l'unité de commande parentale (1), de l'accès au contenu, si l'accès n'est pas autorisé,
où la détermination si l'accès au contenu est autorisé comprend la comparaison (44, 46) d'informations relatives au contenu avec des informations spécifiques à l'utilisateur,
où les informations relatives au contenu comprennent des informations pouvant être extraites de la demande,
où les informations pouvant être extraites de la demande comprennent des informations d'identification de service et des informations d'identification de contenu, les informations d'identification de service comprenant un identifiant du fournisseur de service et les informations d'identification de contenu comprenant un ou plusieurs paramètres spécifiques au service et/ou une URL.

2. Procédé selon la revendication 1, où le réseau d'accès est l'un des réseaux suivants : WiFi, réseau cellulaire et hotspot.

3. Procédé selon la revendication 1 ou la revendication 2, où les informations de contenu comprennent en outre des informations pouvant être extraites d'une base de données de contenu configurée dans l'unité de commande parentale (1).

4. Procédé selon la revendication 3, où les informations pouvant être extraites d'une base de données de contenu comprennent des informations de restriction d'utilisateur pour le contenu.

5. Procédé selon l'une des revendications 1 à 4, où les informations spécifiques à l'utilisateur peuvent être extraites d'une base de données d'utilisateur configurée dans l'unité de commande parentale (1) et/ou peuvent être reçues d'au moins un autre équipement utilisateur (7).

6. Procédé selon l'une des revendications 1 à 5, où les informations spécifiques à l'utilisateur comprennent un âge de l'utilisateur de l'équipement utilisateur et/ou des informations d'autorisation de contenu.

7. Procédé selon l'une des revendications 1 à 6, comprenant en outre :
la création (42), si des informations de restriction d'utilisateur ne sont pas mémorisées pour un/le contenu dans une/la base de données de contenu, d'au moins une entrée dans la base de données de contenu comprenant des informations de restriction d'utilisateur ; et/ou
la mise à jour (42), si des informations de restriction d'utilisateur sont mémorisées pour un/le contenu dans une/la base de données de contenus, d'au moins une entrée dans la base de données de contenu comprenant des informations de restriction d'utilisateur.

8. Procédé selon la revendication 7, où la création et/ou la mise à jour comprennent :
la collecte d'informations relatives aux restrictions d'utilisateur dans au moins une base de données ;
la détermination des informations de restriction d'utilisateur sur la base des informations relatives aux restrictions d'utilisateur ; et
la mémorisation des informations de restriction d'utilisateur dans la base de données de contenu.

9. Procédé selon la revendication 7 ou la revendication 8, où la création et/ou la mise à jour comprennent :
la réception d'informations relatives aux restrictions d'utilisateur provenant d'au moins un autre équipement utilisateur ;
la détermination des informations de restriction d'utilisateur sur la base des informations relatives aux restrictions d'utilisateur ; et
la mémorisation des informations de restriction d'utilisateur dans la base de données de contenu.

10. Procédé selon l'une des revendications 1 à 9, où le blocage d'accès au contenu comprend l'envoi d'un message d'erreur à l'équipement utilisateur (5) et/ou l'envoi d'une notification à au moins un autre équipement utilisateur (7).

11. Unité de commande parentale (1) pour commander un accès à un contenu selon l'une des revendications 1 à 10.

12. Système, comprenant une unité de commande parentale (1) selon la revendication 11 et au moins un équipement utilisateur (5), où l'équipement utilisateur (5) est configuré pour envoyer une demande d'accès à un contenu et/ou pour recevoir une notification de l'unité de commande parentale (1) et/ou pour envoyer des informations spécifiques à l'utilisateur et/ou des informations relatives aux restrictions d'utilisateur à l'unité de commande parentale (1).
